# EUROPEAN PATENT SPECIFICATION

(11) **EP 2 996 392 B1**
(45) Date of publication and mention of the grant of the patent: **31.01.2018**
(21) Application number: 14795389.7
(22) Date of filing: 09.05.2014
(51) Int. Cl.: H04W 36/08, H04J 11/00, H04W 28/16, H04W 72/04

(54) **MOBILE COMMUNICATION SYSTEM FOR HANDOVER WITH SIGNALING DIVERSITY**
MOBILKOMMUNIKATIONSSYSTEM FÜR HANDOVER MIT SIGNALISIERUNGSDIVERSITÄT
SYSTÈME DE COMMUNICATION MOBILE POUR TRANSFERT AVEC DIVERSITÉ DE SIGNALISATION

(30) Priority: 09.05.2013 JP 2013099364
(43) Date of publication of application: 16.03.2016
(73) Proprietor: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP); NAGATA, Satoshi, Tokyo 100-6150 (JP); HAPSARI, Wuri Andarmawanti, Tokyo 100-6150 (JP); TAKEDA, Kazuki, Tokyo 100-6150 (JP)
(74) Representative: Hoffmann Eitle
(86) International application number: PCT/JP2014/062468
(87) International publication number: WO 2014/181866

(56) References cited:
- WO-A2-2013/055193
- US-A1- 2008 227 456
- US-A1- 2011 249 643
- US-A1- 2013 210 422
- ERICSSON ET AL: "Protocol architecture alternatives for dual connectivity", 3GPP DRAFT; R2-130420 -PROTOCOL ARCHITECTURE ALTERNATIVES FOR DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG2, no. Malta; 20130128 - 20130201 18 January 2013 (2013-01-18), XP050668083, Retrieved from the Internet: URL:http://www.3gpp.org/ftp/tsg_ran/WG2_RL 2/TSGR2_81/Docs/ [retrieved on 2013-01-18]
- ERICSSON ET AL: "Small cell challenges and benefits of dual connectivity", 3GPP DRAFT; R2-130416 - SMALL CELL CHALLENGES AND BENEFITS OF DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG2, no. Malta; 20130128 - 20130201 18 January 2013 (2013-01-18), XP050668082, Retrieved from the Internet: URL:http://www.3gpp.org/ftp/tsg_ran/WG2_RL 2/TSGR2_81/Docs/ [retrieved on 2013-01-18]
- SAMSUNG: "Control Signaling Enhancements for Small Cells", 3GPP DRAFT; R1-131024 SMALL CELL CONTROL ASPECTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chicago, USA; 20130415 - 20130419 6 April 2013 (2013-04-06), XP050697000, Retrieved from the Internet: URL:http://www.3gpp.org/ftp/tsg_ran/WG1_RL 1/TSGR1_72b/Docs/ [retrieved on 2013-04-06]
- ERICSSON ET AL.: 'Physical layer aspects of dual connectivity' 3GPP TSG-RAN WG1#72 R1-130566 28 January 2013, XP050663823 Retrieved from the Internet: <URL:http://www. 3gpp.org/ftp/tsg_ran/WG1_RL1/TSGR1_72/Docs/ R1- 130566.zip>
- ERICSSON ET AL.: 'Heterogeneous networks mobility enhancements with handover signaling diversity' 3GPP TSG-RAN WG2#81 R2- 130469 28 January 2013, XP050668098 Retrieved from the Internet: <URL:http://www.3gpp.org/ftp/ tsg_ran/WG2_RL2/TSGR2_81/Docs/R2-130469.zip >

## Description

### TECHNICAL FIELD

The present invention relates to a mobile communication system.

### BACKGROUND ART

In LTE (Long Term Evolution), when a mobile station UE in "RRC Connected state" moves across a cell boundary, a handover procedure is to take place in order to cause the mobile station UE to perform communication always by using an appropriate cell.

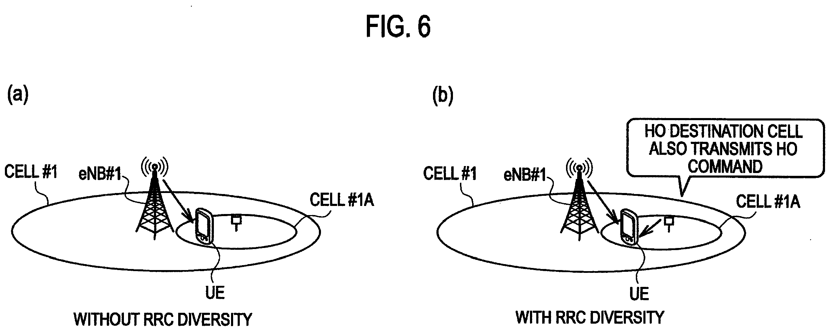

However, when the handover procedure takes place between cells using the same frequency, there is a concern that the mobile station UE cannot receive "HO command" from a handover source cell due to interference from a neighboring cell, and the handover procedure ends up in failure (see Fig. 6(a)).

Accordingly, as shown in Fig. 6(b), there has been proposed a control method (RRC diversity) configured to transmit the "HO command" not only from the handover source cell but also from a handover destination cell in order to improve a probability of reception of the "HO command" by the mobile station UE, and thus to suppress a failure in the handover procedure (see Non-patent Document 1).

Here, the "RRC diversity" can be implemented by CoMP transmission-reception (Coordinated Multi-Point transmission-reception) on a downlink.

Note that the CoMP transmission-reception on the downlink is a technique for improving throughput on the downlink by transmitting either the same or different data from multiple (a plurality of) TPs (Transmission Points) to the mobile station UE.

### PRIOR ART DOCUMENT

### NON-PATENT DOCUMENT

Non-patent document 1: 3GPP Written Contributions R2-131211

ERICSSON ET AL., "Protocol architecture alternatives for dual connectivity", 3GPP DRAFT; R2-130420 describes protocol architecture alternatives for dual connectivity, being the operation where the UE can have simultaneous connectivity to at least two different network points (macro eNB, low power eNB), in particular when the different network points operate on the same or separate frequency, and further proposes to send a handover command via multiple network nodes and to support lower layer TDM between macro and low power eNB to support single transmission UEs.
US 2011/249643 A1 relates to channel state information reporting and proposes TDM resource partitioning for two eNBs.

### SUMMARY OF THE INVENTION

At present, the CoMP transmission-reception on the downlink can be carried out only in the cells under the same radio base station eNB.

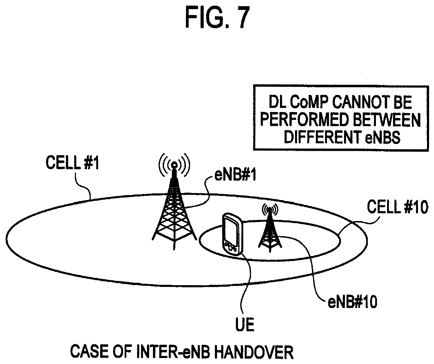

Accordingly, there is a problem that the "RRC diversity" cannot be implemented in a handover procedure between cells under different radio base stations eNB as shown in Fig. 7.

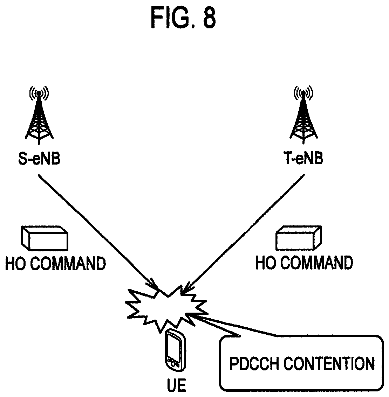

Moreover, as shown in Fig. 8, a physical layer needs to be adjusted such that contention of resources for PDCCH (Physical Downlink Control Channel) for notification of scheduling information (DCI: Downlink Control Information) concerning "HO command" may not occur between a handover source radio base station S-eNB and a handover destination radio base station T-eNB.

However, the conventional LTE method does not consider the above-mentioned conditions in the physical layer in implementing the "RRC diversity," and therefore has a problem that it is not possible to implement the "RRC diversity" in the handover procedure between the cells under different radio base stations eNB.

The present invention has been made in view of the aforementioned problem. An object of the present invention is to provide a mobile communication system which is capable of implementing "RRC diversity" in a handover procedure between cells under different radio base stations eNB, while considering conditions in a physical layer.

A first feature of the present invention is summarized as a mobile communication system including all features of independent claim 1. Further preferred embodiments are defined in claim 2.

### BRIEF DESCRIPTION OF THE DRAWINGS

[Fig. 1] Fig. 1 is a view for explaining an overall configuration of a mobile communication system according to an embodiment of the present invention.
[Fig. 2] Fig. 2 is a functional block diagram of a radio base station eNB #1/eNB #10 according to the embodiment of the present invention.
[Fig. 3] Fig. 3 is a diagram for explaining an operation of the mobile communication system according to the embodiment of the present invention.
[Fig. 4] Fig. 4 is a diagram for explaining an operation of a mobile communication system according to a first modified example of the present invention.
[Fig. 5] Fig. 5 is a diagram showing an example of a downlink subframe structure in the mobile communication system according to the first modified example of the present invention.
[Fig. 6] Fig. 6 is a view for explaining the related art.
[Fig. 7] Fig. 7 is a view for explaining the related art.
[Fig. 8] Fig. 8 is a view for explaining the related art.

### MODE FOR CARRYING OUT THE INVENTION

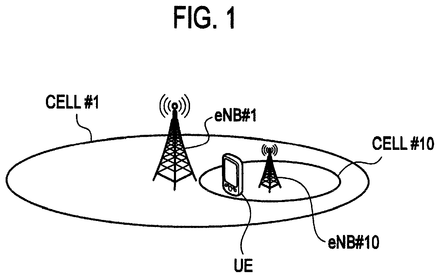

A mobile communication system according to an example of the present invention will be described with reference to Fig. 1 to Fig. 3.

As shown in Fig. 1, a mobile communication system of this example includes a radio base station eNB #1 which manages a cell #1, and a radio base station eNB #10 which manages a cell #10.

An area covered by the cell #1 and an area covered by the cell #10 are designed to at least partially overlap each other geographically. Here, the cell #1 and the cell #10 are cells using the same frequency.

For example, the cell #1 may be a macro cell while the cell #10 may be a small cell such as a phantom cell.

Meanwhile, the mobile communication system of this example is configured to be capable of carrying out CoMP on a downlink between the cell #1 under the radio base station eNB #1 and the cell #10 under the radio base station eNB #10.

Note that this example will be described on the assumption that a mobile station UE connected to the cell #1 is to be handed over to the cell #10.

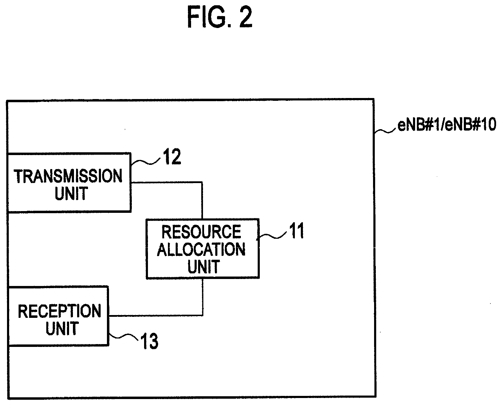

As shown in Fig. 2, the radio base station eNB of this example, namely, each of the radio base stations eNB #1 and eNB #10 of this example includes a resource allocation unit 11, a transmission unit 12, and a reception unit 13.

The resource allocation unit 11 of the radio base station eNB #1 is configured to manage resources in the cell #1, including PDSCH (Physical Downlink Shared Channel), PDCCH, PUSCH (Physical Uplink Shared Channel), PUCCH (Physical Uplink Control Channel), and the like.

Meanwhile, the resource allocation unit 11 of the radio base station eNB #10 is configured to manage resources in the cell #10, including PDSCH, PDCCH, PUSCH, PUCCH, and the like.

The reception unit 13 of the radio base station eNB #1 is configured to receive various signals from the mobile station UE and the radio base station eNB #10, and the transmission unit 12 of the radio base station eNB #1 is configured to transmit various signals to the mobile station UE and the radio base station eNB #10.

Meanwhile, the reception unit 13 of the radio base station eNB #10 is configured to receive various signals from the mobile station UE and the radio base station eNB #1, and the transmission unit 12 of the radio base station eNB #10 is configured to transmit various signals to the mobile station UE and the radio base station eNB #1.

Specifically, when the mobile station UE connected to the cell #1 performs a handover to the cell #10, the transmission unit 12 of the radio base station eNB #1 and the transmission unit 12 of the radio base station eNB #10 are configured to transmit "HO command" to the mobile station UE in the cell #1 and the cell #10, respectively.

In this case, the resource allocation unit 11 of the radio base station eNB #1 and the resource allocation unit 11 of the radio base station eNB #10 are configured to allocate the PDCCH for notification of scheduling information (DCI) concerning the "HO command" to the mobile station UE.

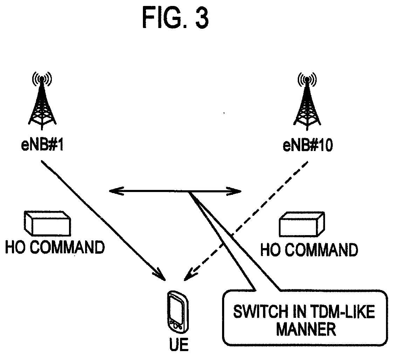

Here, as shown in Fig. 3, a subframe to which the PDCCH for notification of the scheduling information concerning the "HO command" can be allocated is configured to be switched in a time-division manner between the resource allocation unit 11 of the radio base station eNB #1 and the resource allocation unit 11 of the radio base station eNB #10.

Note that the scheduling information for switching the PDCCH by time division between the radio base station eNB #1 and the radio base station eNB #10 may be configured to be determined between the radio base station eNB #1 and the radio base station eNB #10 in CoMP transmission-reception establishment processing, for example.

For instance, by using "CoMP preparation" and "CoMP ACK," the radio base station eNB #1 and the radio base station eNB #10 may be adjusted not to transmit the "HO command" simultaneously by using the same resources for the PDCCH.

### (First embodiment)

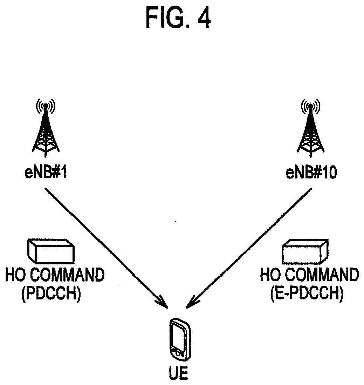

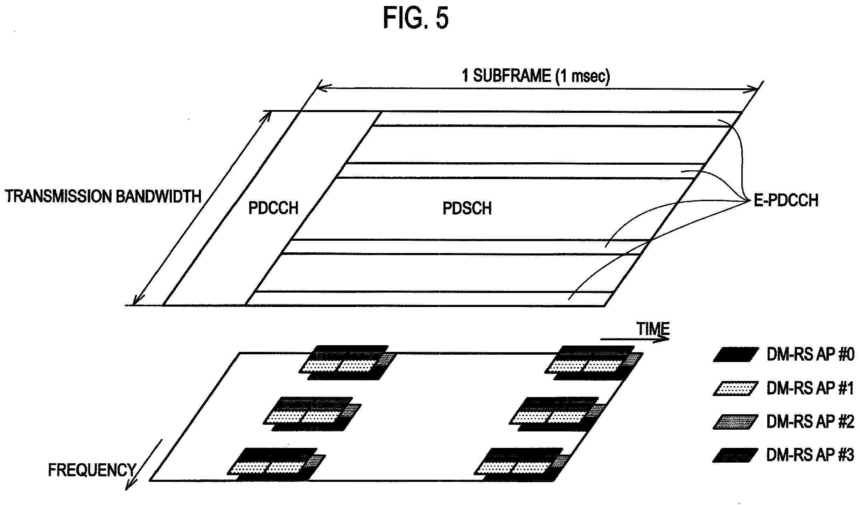

A mobile communication system according to a first embodiment of the present invention will be described below with reference to Fig. 4 and Fig. 5 while focusing on different features from those of the mobile communication system according to the above-mentioned example.

In the mobile communication system according to the first embodiment as well, when the mobile station UE connected to the cell #1 performs a handover to the cell #10, the transmission unit 12 of the radio base station eNB #1 and the transmission unit 12 of the radio base station eNB #10 are configured to transmit "HO command" to the mobile station UE in the cell #1 and the cell #10, respectively.

In this case, as shown in Fig. 4, the radio base station eNB #1 is configured to notify of the scheduling information concerning the "HO command" through the PDCCH. The radio base station eNB #10 is configured to notify of the scheduling information concerning the "HO command" through an E-PDCCH (Enhanced-PDCCH).

Fig. 5 shows an example of a configuration of a downlink subframe. As shown in Fig. 5, resources for the PDCCH and resources for the E-PDCCH are arranged not to cause contention in each subframe.

Note that the above-mentioned scheduling information may be determined between the radio base station eNB #1 and the radio base station eNB #10 in the CoMP transmission-reception establishment processing, for example.

For instance, by using the "CoMP preparation" and the "CoMP ACK," the radio base station eNB #1 and the radio base station eNB #10 may be adjusted not to transmit the "HO command" by using the same resources.

The features of the present embodiment may also be expressed as follows.

A first feature of the present embodiment is summarized as a mobile communication system including: a radio base station eNB#1 (first radio base station) configured to manage a cell #1 (first cell) ; and a radio base station eNB#10 (second radio base station) configured to manage a cell #10 (second cell) . Here, the radio base station eNB#1 and the radio base station eNB#10 are configured to transmit "HO command (handover instruction signal)" to a mobile station UE connected to the cell #1, in the cell #1 and the cell #10, respectively, when a handover of the mobile station UE to the cell #10 is performed, and the radio base station eNB#1 and the radio base station eNB#10 are configured to switch a subframe in a time-division manner between the radio base station eNB#1 and the radio base station eNB#10, the subframe being a subframe to which PDCCH (physical downlink control channel) to transmit scheduling information concerning the "HO command" is allocatable.

According to the above-described aspect, the subframe to which the PDCCH for notification of the scheduling information concerning the "HO command" can be allocated is switched in the time-division manner between the radio base station eNB #1 and the radio base station eNB #10. Thus, it is possible to achieve adjustment such that resource contention will not occur for the PDCCH for the notification of the scheduling information.

A second feature of the present embodiment is summarized as a mobile communication system including: a radio base station eNB#1 (first radio base station) configured to manage a cell #1 (first cell) ; and a radio base station eNB#10 (second radio base station) configured to manage a cell #10 (second cell). Here, the radio base station eNB#1 and the radio base station eNB#10 are configured to transmit "HO command" to a mobile station UE connected to the cell #1, in the cell #1 and the cell #10, respectively, when a handover of the mobile station UE to the cell #10 is performed, the radio base station eNB#1 is configured to transmit scheduling information concerning the "HO command" through PDCCH (physical downlink control channel), and the radio base station eNB#10 is configured to transmit scheduling information concerning the "HO command" through an E-PDCCH (enhanced physical downlink control channel).

According to the above-described aspect, the radio base station eNB #1 is configured to notify of the scheduling information concerning the "HO command" through the PDCCH, while the radio base station eNB #10 is configured to notify of the scheduling information concerning the "HO command" through the E-PDCCH. Thus, it is possible to achieve the adjustment such that resource contention will not occur for the notification of the scheduling information.

In the first feature of the present embodiment, the scheduling information for switching the PDCCH in the time-division manner may be determined between the radio base station eNB#1 and the radio base station eNB#10 in CoMP transmission-reception (coordinated multi-point transmission-reception) establishment processing.

According to the above-described feature, it is possible to achieve the adjustment in such a way not to transmit the "HO command" simultaneously by using the same resources for the PDCCH.

It should be noted that the foregoing operations of the mobile station UE and radio base stations eNB#1/eNB#10 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and radio base stations eNB#1/eNB#10. Otherwise, the storage medium and the processor may be provided as discrete components inside the mobile station UE and radio base stations eNB#1/eNB#10.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention, which are determined by the description of the scope of claims. Therefore, the description of the specification is intended for illustrative explanation only and does not impose any limited interpretation on the present invention.

### INDUSTRIAL APPLICABILITY

As described above, according to the present invention, it is possible to provide a mobile communication system which is capable of implementing "RRC diversity" in a handover procedure between cells under different radio base stations eNB, while considering conditions in a physical layer.

### EXPLANATION OF THE REFERENCE NUMERALS

- eNB: #1/eNB #10 radio base station
- UE: mobile station
- 11: resource allocation unit
- 12: transmission unit
- 13: reception unit

## Claims

1. A mobile communication system comprising:
a first radio base station (eNB #1) configured to manage a first cell; and
a second radio base station (eNB #10) configured to manage a second cell, wherein
the first radio base station (eNB #1) and the second radio base station (eNB #10) are configured to transmit a handover instruction signal to a mobile station (UE) connected to the first cell, in the first cell and the second cell, respectively, when a handover of the mobile station (UE) to the second cell is performed,
the first radio base station (eNB #1) is configured to transmit scheduling information concerning the handover instruction signal through a physical downlink control channel, and
the second radio base station (eNB #10) is configured to transmit scheduling information concerning the handover instruction signal through an enhanced physical downlink control channel.

2. The mobile communication system according to claim 1, wherein the scheduling information is determined between the first radio base station (eNB #1) and the second radio base station (eNB #10) in coordinated multi-point transmission-reception establishment processing.

## Patentansprüche

1. Mobilkommunikationssystem, umfassend:
eine erste Funkbasisstation (eNB#1), die dazu konfiguriert ist, eine erste Zelle zu verwalten; und
eine zweite Funkbasisstation (eNB #10), die dazu konfiguriert ist, eine zweite Zelle zu verwalten, wobei
die erste Funkbasisstation (eNB#1) und die zweite Funkbasisstation (eNB#10) dazu konfiguriert sind, jeweils in der ersten Zelle und der zweiten Zelle ein Übergabeanweisungssignal an eine mit der ersten Zelle verbundene Mobilstation (UE) zu übertragen, wenn eine Übergabe der Mobilstation (UE) an die zweite Zelle durchgeführt wird,
die erste Funkbasisstation (eNB#1) dazu konfiguriert ist, eine das Übergabeanweisungssignal betreffende Planungsinformation durch einen physikalischen Downlink-Steuerkanal zu übertragen, und
die zweite Funkbasisstation (eNB#10) dazu konfiguriert ist, eine das Übergabeanweisungssignal betreffende Planungsinformation durch einen verbesserten physikalischen Downlink-Steuerkanal zu übertragen.

2. Mobilkommunikationssystem nach Anspruch 1, wobei die Planungsinformation zwischen der ersten Funkbasisstation (eNB#1) und der zweiten Funkbasisstation (eNB#10) in einer koordinierten Mehrpunkt-Übertragungs-/Empfangseinrichtungsverarbeitung bestimmt wird.

## Revendications

1. Système de communication mobile comprenant :
une première station de base radio (eNB #1) configurée pour gérer une première cellule ; et
une seconde station de base radio (eNB #10) configurée pour gérer une seconde cellule, dans lequel
la première station de base radio (eNB #1) et la seconde station de base radio (eNB #10) sont configurées pour transmettre un signal d'instruction de transfert à une station mobile (UE) connectée à la première cellule, dans la première cellule et la seconde cellule respectivement, lorsqu'un transfert de la station mobile (UE) vers la seconde cellule est effectué,
la première station de base radio (eNB #1) est configurée pour transmettre des informations de planification concernant le signal d'instruction de transfert via un canal de commande en liaison descendante physique, et
la seconde station de base radio (eNB #10) est configurée pour transmettre des informations de planification concernant le signal d'instruction de transfert via un canal de commande en liaison descendante physique amélioré.

2. Système de communication mobile selon la revendication 1, dans lequel les informations de planification sont déterminées entre la première station de base radio (eNB #1) et la seconde station de base radio (eNB #10) dans un traitement d'établissement de transmission-réception multipoint coordonnée.
